(19) Europäisches Patentamt

European Patent Office

Office européen des brevets

(11) EP 0 995 489 A2

## (12) EUROPEAN PATENT APPLICATION

(43) Date of publication:
26.04.2000 Bulletin 2000/17

(51) Int. Cl.$^7$: **B01J 10/00**, B01J 19/24,
B01J 19/26

(21) Application number: 99120699.6

(22) Date of filing: 19.10.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: **21.10.1998 US 176091**

(71) Applicant:
**PRAXAIR TECHNOLOGY, INC.
Danbury, CT 06810-5113 (US)**

(72) Inventor: **Cheng, Alan Tat Yan
Livingstone, New Jersey 07039 (US)**

(74) Representative:
**Schwan, Gerhard, Dipl.-Ing.
Elfenstrasse 32
81739 München (DE)**

(54) **Process for accelerating fast reactions using high intensity plug flow tubular reactors**

(57) A process for intensifying fast plug flow reactions between a gas and a liquid using a high intensity tubular reactor based on supersonic two-phase flow principles under high pressure.

FIG. 1

EP 0 995 489 A2

**Description**

FIELD OF THE INVENTION

This invention relates to a method for intensifying the reactions between a gas and a liquid, and more particularly to a method for producing fast plug flow reactions between a gas and a liquid using a high intensity tubular reactor with the gas phase dispersed under a supersonic two-phase flow condition.

BACKGROUND OF THE INVENTION

Gas-liquid reactors are widely used in a number of different industrial applications including gas scrubbing, biotechnology, manufacture of pure products, liquid phase processes, and multiphase flows in the petroleum industry. In gas-liquid reactions, the gas diffuses from the gas phase through a gas-liquid interface, and thus generally limited by the mass transfer rate. This is especially true for fast chemical reactions where the kinetic constant can be an order of magnitude higher than the gas-liquid mass transfer coefficient. Therefore, high intensity mixing device is necessary to enhance the gas-liquid mass transfer rate.

Tubular reactors have the advantage of packing high power into a single reactor volume for process intensification. It is suitable for processes that require high radial mixing efficiency, plug flow and short contacting time. Short contacting time can be easily achievable in a gas-liquid reacting system since the gas can be flashed off or quenched thermally to stop further reactions. Several gas-liquid reactions have been studied using tubular reactors. Examples are oxidation of methanol to formaldehyde and amination of o-nitrochlorobenzene with ammonia in tubular reactors. See, M. Sohrabi, "Catalytic Oxidation of Methanol in a Packed Bed Tubular Reactor", *Am. Chem. Soc., Div. Pet Chem., Prepr*. Vol. 35, No. 4, 1990-08, pp. 831, and F.B. Yu, *Jisuanji Yu Yingyong Huzxue*, 1984, Vol, 1, pp. 112-18. For gas-liquid reactions, a high intensity tubular reactor would be especially advantageous for fast sequential competing reactions:

$$A_{liquid} + B_{gas} \rightarrow C_{product} \qquad (1)$$

$$B_{gas} + C_{product} \rightarrow D_{by\text{-}product} \qquad (2)$$

Sequential competing reactions involving one or more gaseous reactants are difficult to handle because the reaction is often limited by the mass transfer of the gaseous reactant to the liquid (in two phase flow reaction) or solid phase (in three phase flow reactions). Reaction (1) is generally the faster reaction where $C_{product}$ is the desirable product. The product can be either a liquid or a solid. The reaction can be homogeneous (gas-liquid reaction) or heterogeneous (gas-liquid with a catalyst). After the unreacted gas is separated from the reaction broth, the pure product is recovered. Reaction (2) is generally the slower reaction at which one or more of the desirable product reacts with the unreacted gas, forming by-product D. The by-product can be gas, liquid or solid. It is desirable to have reaction (1) completed prior to the formation of by-products.

Most of the gas-liquid or gas-liquid-solid reactions are limited by the mass transfer rate. It is usually slower for the gas to dissolve from the gas phase into the liquid phase than the intrinsic chemical kinetic. In stirred tank reactors, the product is back-mixed with the reactant, yielding excessive reaction by-products. Therefore, the selectivity is very poor.

If the mass transfer and mixing characteristic of the tubular reactor is high, it will allow the gas-liquid reaction to proceed close to equilibrium in a short single pass. By flashing off the remaining gas or quenching the reacting mass, it will further stop the slower by-product formation step. Therefore, a high intensity gas-liquid reactor will not only improve productivity, it can also improve product selectivity.

Conventional static mixers will improve the mass transfer rate for this type of gas-liquid reactions in a tubular reactor. Interfacial surface area is increased by shearing the gas and liquid through the torturous paths. This type of static or motionless mixer is preferably used inside tubular reactors or reactor heat exchangers for liquid-liquid mixings or reactions. However, gas will coalesce and segregate rapidly from the liquid mixture. Therefore, the mass transfer, or the objective of the coefficient, can seldom exceed the order of 0.5 to 1 $sec^{-1}$.

Small gas bubbles have a much higher interfacial area for mass transfer. By dispersing superfine gas bubbles into the liquid phase, it is possible to further improve the gas-liquid mass transfer coefficient. Therefore, it is an object of this invention to develop a mass transfer device to provide intensified gas-liquid mass transfer through the creation of superfine gas bubbles.

This tubular reactor has very high efficiency because of its ability to create fine gas bubbles that are less than a fraction of a millimeter in diameter. Fine gas bubble formation in a supersonic in-line mixer is based on the principle that the speed of sound is much lower in a gas-liquid mixture than in either the gas or the liquid component. By accelerating the two-phase mixture to a velocity higher than the speed of sound using a converging-diverging nozzle, a shock wave is created to break the gas bubbles into a very fine dispersion.

A high intensity tubular reactor is developed based on supersonic two-phase principles. The supersonic two-phase flow can be practically achieved because the speed of sound is much lower in a liquid-gas mixture than in either the gas or the liquid component. By accelerating the two-phase mixture to a velocity higher than the speed of sound, a shockwave can be created to shatter bubbles into tiny ones.

One difficulty in developing this invention is compensating for excessive pressure drop even at reduced velocity. Pressure drops in gas-liquid flow may be significantly greater than in a single-phase flow. See, Ovid Baker, "Multiphase Flow in Pipelines", *The Oil and Gas Journal*, pp. 156-167, Nov. 10, 1958. Therefore, the ability to predict the pressure drop of a two-phase flow mixture is a critical step in predicting the supersonic two-phase flow condition for such a device.

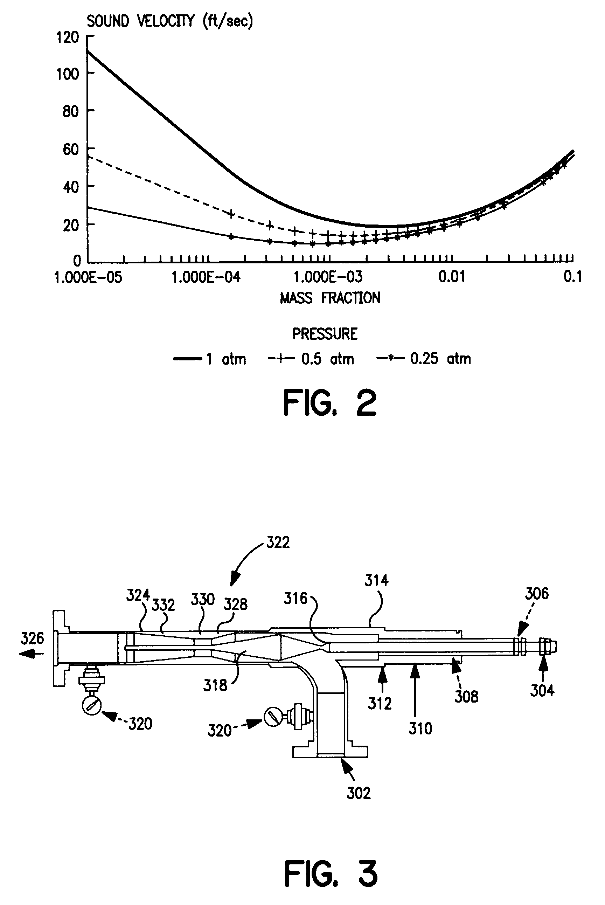

Another difficulty in developing this invention is that the supersonic two-phase flow will favor lower pressure, as shown in Fig. 2. As the pressure decreases, the thermodynamic sound velocity will decrease. That means the flow rate of the two phase mixture can be reduced to level effective for supersonic two phase flow without excess pumping power. Therefore, the supersonic two-phase flow principle has been applied successfully to stripping operation. The pressure inside a supersonic stripper is usually dropped below one atmosphere. However, the mass transfer rate and kinetic of a fast gas-liquid reaction will favor higher pressures. Therefore, this invention must be capable of providing both low pressure environment for supersonic two phase flow and high pressure environment for improved gas-liquid reaction rates.

Theoretical thermodynamic equations predict both the adiabatic and isothermal sound speeds approaching minimums at about $1 \times 10^{-3}$ to $2 \times 10^{-3}$ gas-to-liquid mass fractions. The high gas loading ratio makes it ideal for the supersonic flow principle to be used in gas-liquid reactions.

"Plug flow" reactors have been known in the art to provide very little back mixing. Using such "plug flow" reactor for gas-liquid reaction is generally not successful because the gas can segregate rapidly from the liquid due to gravity. It is also difficult to create fine gas bubbles and good mixing during plug flow conditions. Therefore, it takes a long time for the gas to dissolve sufficient quality into the liquid to provide adequately yield. For many cases, by the time that $B_{gas}$ has sufficiently reacted with the $A_{liquid}$, the by-product will have also started forming in unacceptable quantity. Increase selectivity may be effected through temperature and pressure reduction. However, reaction (1) will also slowed down as the reduction to the reaction rate of (2) is effected. Subsequently, the yield (the amount of B reacted) is reduced at the expense of selectivity.

The use of supersonic two phase flow principle to break the gas bubbles into finer dispersion, mainly for gas dissolution has been known in the art. However, it did not describe the advantages of how to use such as supersonic two phase principle to enhance yield and selectivity in such consecutive competing chemical reactions. It is therefore, the objective of this invention to provide a process to increase the conversion and yield of reaction rate (1) and yet reduce the byproduct formation rate (2).

## SUMMARY OF THE INVENTION

This invention is directed to a process for intensifying the rate of a plug flow reactions between a gas and a liquid comprising passing a gas stream into a high intensity tubular reactor, breaking the gas stream into bubbles, dispensing the bubbles into a liquid phase under pressure, facilitating gas-liquid transfer between the bubbles and the liquid phase, and quenching the reaction if necessary to stop the formation of byproducts.

This invention is particularly directed to a process for intensifying the rate of transfer between a gas phase and a liquid phase in a plug flow tubular reactor. This process comprises passing the gas phase into the liquid phase at an inlet of a high intensity tubular reactor. The gas phase and the liquid phase is accelerated to supersonic velocity. The velocity of the gas phase and the liquid phase is then reduced from supersonic velocity to subsonic velocity at a pressure of higher than about 1 atm. The gas phase is broken into bubbles, and the bubbles are dispersed into the liquid phase. In effect, the gas phase and the liquid phase facilitate the reaction between the bubbles and the liquid phase.

## BRIEF DESCRIPTION OF THE DRAWINGS

Other objects, features and advantages will occur to those skilled in the art from the following description of preferred embodiments and the accompanying drawings, in which:

Fig. 1 is a schematic of a high intensity tubular reactor assembly in this invention;
Fig. 2 is a graph of the theoretical sound wave equation as a function of gas mass fraction in this invention;
Fig. 3 is a schematics of a supersonic two-phase flow mixer used in the inlet of the high intensity tubular reactor in this invention;
Fig. 4 is a graph depicting the effects of back pressure on pressure drop through a supersonic in-line mixer with two phase flow in this invention;
Fig. 5 is a graph of the oxygen transfer rate as a function of oxygen addition in this invention;
Fig 6 is a graph depicting the power lost in operating the supersonic in-line mixer of this invention; and
Fig. 7 is a schematics of a venturi device including a low temperature quenching zone in this invention.

## DETAILED DESCRIPTION OF THE INVENTION

To increase the yield and selectivity of such reactions, it is necessary to create an instantaneous reaction conditions for reaction (1).

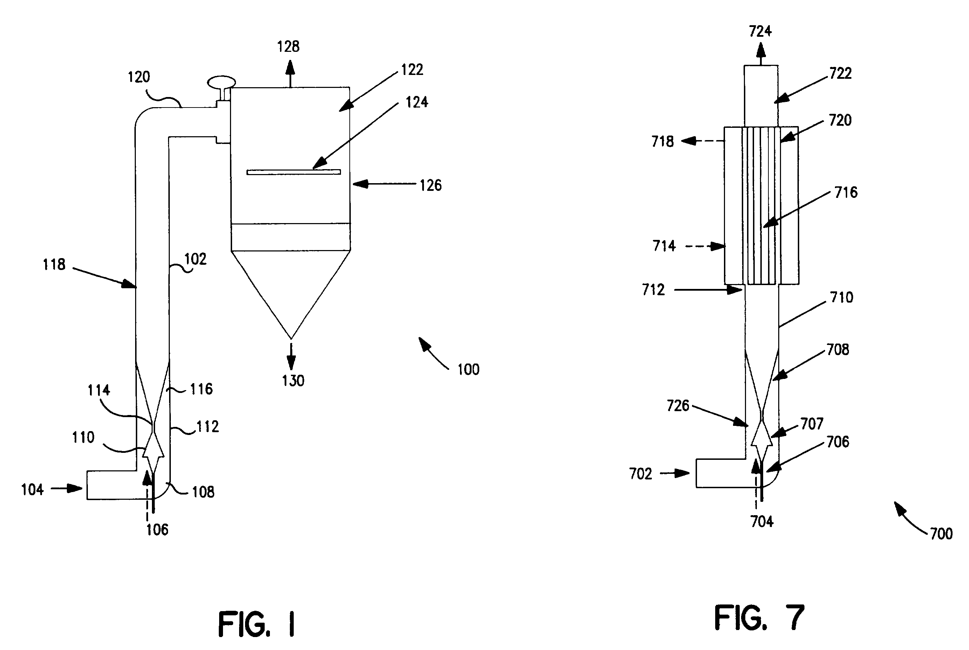

Fig. 1 shows the schematic 100 of a high intensity tubular reactor 102 suitable for the fast sequential competing reactions. The liquid reactant 104, with or without a catalyst, is first preheated to reaction temperatures. The catalyst can be a homogenous (soluble in the reactant) or a heterogeneous catalyst (solid catalyst or metal supported catalyst). The liquid reactants are then pumped to the inlet 108 of the high intensity tubular reactor 102 at a pressure substantially higher than atmospheric pressure (1 atm to 200 atm).

Gaseous reactant 106 such as oxygen, hydrogen, chlorine, bromine or ozone can be preheated also to reaction temperatures. The preheating eliminates the holding time necessary for the reactor to bring the gaseous reactants to a temperature (or the rate of motion of the gaseous reactant) to effect a reaction. Gaseous reactant 106 is then injected into liquid reactant 104, under pressure, at the entrance 108 of the high intensity tubular reactor, forming a two or three phase mixture. Minimal reaction takes place at this point because reactive $B_{gas}$ stream has very little surface area to volume ratio. Little or no gas is dissolved into the liquid.

The two or three phase mixtures are then accelerated to a supersonic two phase flow velocity by the restriction of a compression cone 110 in the form of a venturi 112. To match the higher pressure requirement for a high intensity gas-liquid reaction and the low pressure requirement for a supersonic two-phase flow, a deflector is used to reduce the throat diameter of the venturi 112 such that the velocity of the two-phase mixture is significantly higher when passing through the throat 114. At the venturi throat with reduced throat diameter, almost all of the potential energy or pressure head is converted into kinetic energy at the throat of the venturi 112. Therefore, a low pressure zone is artificially created in the venturi throat 114. An intensive shockwave is formed when the two or three phase mixture exits from the throat of the venturi 112. The shockwave breaks the gas bubbles into microscopic bubbles dispersed in the liquid reactant mixture, improving the mass transfer rate from the gas phase to the liquid phase and also to the solid phase if a heterogeneous catalyst is used. With very high surface area to volume ratio, the reactive $B_{gas}$ can be dissolved and reacted instantaneously with the reactant A. To provide sufficient distance for the low pressure shockwave to occur and sufficient pressure recovery, an expansion cone 116 with an inclusion angle of less than 30 degree is used. At the expansion cone 116, almost all the kinetic energy is converted back to potential energy or pressure head (with some losses) to allow the reaction to occur under high pressure inside reaction zone 118.

To make the process more favorable for a fast sequential competing reaction, the mixture with microscopic dispersion may be further heated inside reaction zone 118.

A back pressure regulator 120 is used to maintain the pressure inside the high intensity tubular reactor. Mass transfer and reaction can proceed rapidly inside the tubular reactor 102.

By the time the reacting stream passes the back pressure regulator, the sequential reaction (1) should be close to completion. The reacting stream will than enter a flash chamber 122 at which the pressure is reduced immediately. The dissolved gas and unreacted fine gas bubbles will disengage from the liquid. The temperature may also drop due to evaporative cooling, if some of the liquid is evaporated. Inert gas 126 or other additives can also be introduced for dilution quenching. Baffle 124 or some other dispersion means can be used inside the flash chamber to spread out the reacting stream to improve flashing or dissolution quenching. Quenching enables the reaction to stop the sequential reaction (2) from proceeding further to form byproducts. Final products 130 are removed from the bottom of the flash chamber as liquid or collect and separate from the gas stream exiting from the top of the flash chamber.

Fig. 3 shows the schematics 300 of a supersonic in-line mixer used at the inlet of the high intensity tubular reactor to create fine gas dispersion for the reaction. Process fluid 302 with the liquid reactant either with or without solids enter the supersonic mixer. Gas reactant is introduced through connection 304 and injected into the liquid through gas nozzle 316. To convert most of the pressure head into kinetic energy, a deflector cone 318 is used to reduce the throat diameter of the venturi or reducer body 322. The reducer body 322 consists of a compression cone 328, throat 330 and expansion cone 332 sections. To make the defector adjustable, the deflector and the gas injection nozzle are held by an adjuster housing 310. Packing seal 308 and O-ring seal 314 are used to keep the gas or liquid from leaking out. The housing lock nut 312 keeps the deflector in position. A guide 324 in the opposite end keep the deflector 318 from vibrating. Pressure gauge 320 is used to provide information on the process pressure. To further improve the rate of desirable reaction (1), it is necessary to increase the pressure inside the reaction zone (immediately after the formation of the shockwave). However, sound velocity of a two phase mixture is higher under pressure. In order for a shockwave to form, the velocity of the two phase mixture must be further increased to maintain a supersonic two phase conditions. The deflector 318 is used to reduce the throat diameter of the venturi so that the velocity of the two-phase mixture has to be higher when passing through the throat. Therefore, the supersonic mixer would have a higher pressure zone (on the inlet of the compression cone 328), a low pressure zone (the venturi throat 330 with the deflector 318) and a high pressure zone (the expansion cone 332). The gas and liquid velocity also changes from slow, to fast and slow again.

Reducing the throat diameter will increase the pressure on the inlet of the venturi 322. However, only a small amount of reactions will start at this zone since the gas is supplied at a very coarse stream. The intensive shockwave causes reaction (1) to occur rapidly, which may take only seconds or fractions of a seconds to complete. Therefore, the mass transfer rate increases substantially to match the intrinsic reaction rate kinetic of reaction (1). Before reaction (2) can proceed to any significant extend, the reacting broth is passed into a flash chamber 122 (from Fig. 1) where the pressure is dropped to allow the unreacted gas to escape. The amount of reactive gas can he reduced to prevent waste. However, it is practical to supply excess reactive $B_{gas}$ to maintain the conversion of $A_{liquid}$ so that the rate can approach zero as the reactive gas is totally consumed. The flash chamber avoids further reaction between the increased gas with the product. The temperature may also drop as some of the reactive content is flashed off. Optionally, an inert gas can be used for dilution quenching to stop the reaction.

Using the supersonic two-phase principle for gas-liquid mixing is relatively difficult. As the gas-liquid mixture is accelerated in a tubular reactor to meet the minimum sound velocity, the pressure will increase simultaneously. The pressure will, in turn, increase the minimum sound velocity. For low gas loading, it is possible that the supersonic two-phase flow condition do not met.

To utilize the benefits of supersonic two-phase flow, yet avoid the difficulties associated with pressure drop, a family of gas-liquid devices was developed with venturi types of compression and expansion cones. The compression cone 328 allows the gas and liquid to accelerate in a very short distance to a speed above the requirement for sonic flow. The deflector cone 318 allows the throat diameter 320 to be further reduced to suit the reaction conditions. The higher the reaction pressure is required to effectuate a reaction, the further the deflector cone 318 may be pushed into the throat, in order to reduce the throat diameter and further increase the gas-liquid velocity. At the throat 330 of the venturi, the potential energy is converted to kinetic energy and the pressure can drop below that of the atmospheric pressure, or a vacuum is formed. The expansion cone allows the two-phase flow mixture to recover its pressure head by converting the kinetic energy back to potential energy. Similar devices have been used successfully for dissolution of gases and stripping. See, U.S. Patent Nos. 4,861,352; 4,931,225; 4,867,918; 5,061,406; 5,211,916; and 5,302,325, all of which are incorporated by reference. However, the demand of pressurizing the gas and liquid therein is not as high as in case of promoting fast gas-liquid reactions.

Reactive gases or oxygen is injected in a position just upstream of the deflector cone to allow only a fraction of a second for the gas to be dispersed into the liquid. This is very important to minimize by-product formation in reactions where a competing parallel reaction can occur. In this case, the chance for the gas to further react with the product to form undesirable by-products can be minimized.

EXAMPLE

The requirement for high gas dispersion intensity of the supersonic in-line mixer makes it difficult to characterize the mass transfer rate from a reactive mixture. Standard sulfite oxidation could not be carried out because it would be kinetically controlled. In this invention, the simple oxygen dissolution rate was used to determine the mass transfer coefficient. From this data, the kinetic rate constants of fast chemical reactions was matched for potential commercial applications.

In this invention, a 3/4 inch stainless steel supersonic in-line mixer was constructed with a compression angle of 30 degrees. The annular flow area was adjusted on the basis of the position of the deflector as shown in Fig. 3. These adjustments allowed different two-phase flow velocities at a given mass flow rate. When the deflector was fully retreated from the throat, the cross sectional area was constant but the velocity could still be changed by adjusting the pumping rate.

The 3/4 unit was then installed in a pumping loop. Liquid was supplied through a feed tank. Prior to the supersonic two-phase flow experiment, oxygen was stripped from the feed tank by bubbling nitrogen through it. A progressive cavity screw pump was used to supply a constant volume of liquid to the supersonic in-line mixer. Deoxygenated water was supplied at 3, 5, 7, 10 and 15 gpm.

The deoxygenated water passed through a heater so that a constant temperature could be maintained. In all cases, the temperature of the water was maintained at 20 degrees C. Constant temperatures are important for calculating the oxygen level. It is also critical for a reactive system because of the exponential function of kinetic rates on temperatures. The system also allowed the higher temperature runs for increasing the chemical reaction rates.

The liquid entered the supersonic in-line mixer at the desired flow rate where the required amount of gas was injected. The pressure of the gas must be greater than the pressure of the flowing liquid for injection to occur. The pressure both upstream and downstream of the supersonic mixer was measured. In these examples, the downstream pressure was held at some fixed value and the upstream pressure was allowed to vary freely.

A dissolved oxygen analyzer from Orbisphere was used to detect the amount of dissolved oxygen exiting from the mixer. The distance of travel for the two-phase flow was about 1/2 ft. The oxygen transfer prior to the mixer throat was negligible. To ensure that the oxygen analyzer was actually detecting the dissolved oxygen with minimum interference from the oxygen gas bubbles, separate trials were carried out with oxygen dispersed in a tee without the supersonic in-line mixer.

The supersonic in-line mixer was installed in a tubular reactor, 3/4 inches in diameter and 40 feet in length. This allowed comparison of the efficiency of the supersonic in-line mixer against pipeline contacting systems. Two dispersers provided redispersion of the gas into the liquid in the down flow section.

It was found that very high mass transfer rate was achieved by accelerate the two-phase mixture up to the supersonic two-phase velocity. The pressure drop created by the acceleration flow was acceptable for practical applications. It was found in this invention that the pressure drop through the supersonic in-line mixer reduced with increasing back pressure from the tubular reactor. The mass transfer rate per unit horsepower input was higher than most comparable devices.

The theoretical adiabatic sound wave equation, however, could not be readily used in the venturi design for the supersonic tubular reactor because the sound equation is based on fully developed flows through straight pipes. The supersonic tubular reactor, as shown above, does not have fully developed flow through the venturi. Quite often, the flow was laminar and became turbulent as it goes through the venturi throat.

The velocity profile of a two-phase mixture was highly non-uniform as it was accelerated through the compression cone. The results showed that the two-phase flow was supersonic in the center of the velocity profile and subsonic against the wall due to viscous drag. Therefore, experimental data was necessary to derive mathematical expression for a non-uniform supersonic velocity profile. In contrast to fully developed flow in a straight pipe, it was found in this invention that the venturi produced severe entrance effects throughout the supersonic flow regime. Therefore, the flow profile across the venturi throat is not linear. Pressure losses were generally recovered by the expansion cone. With a non-linear profile, shockwave can still occur without accelerating the complete gas-liquid stream above the supersonic two phase flow regime. Therefore, the actually power requirement is less than expected.

As shown in Fig. 2, the sonic velocity for two-phase flow was highly dependent on the absolute pressure. For high pressure fast sequential gas-liquid reactions at several hundred atmospheres, it is difficult to overcome pipe friction to achieve the required velocity, which may reach several hundred feet per second. However, it is feasible to use the venturi device, providing that the expansion cone is at least 30 degree or smaller for pressure recovery. The nonlinear flow profile of the venturi throat with a deflector also allow part of the mixture to reach supersonic two phase flow conditions to create sufficient shock waves for gas dispersions. It was therefore necessary to derive a method of calculating the pressure drop of a compressible two-phase flow based on experimental data.

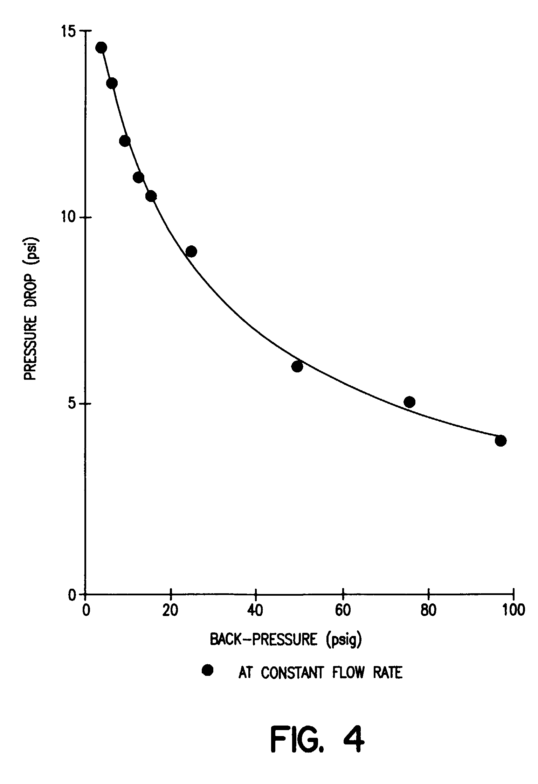

The pressure drop through the venturi throat was one of the most critical factors in designing an in-line stripper. It was previously believed that the supersonic in-line mixer will not be suitable for high pressure reactions because the pressure in the reaction zone will be excessive for a supersonic two-phase flow conditions. However, it was discovered in this invention that the pressure drop through a supersonic mixer would decrease with an increase in back pressure. This can be demonstrated by Fig. 4, the pressure drop was depicted against the total back pressure from the reaction zone. The required pressure drop is reduced substantially with increasing back pressure, probably due to the compressibility of the gas in the liquid. The information for this development of this technology as the total back pressure from the reaction zone can reduce the demand on the upstream pressure of the supersonic mixer.

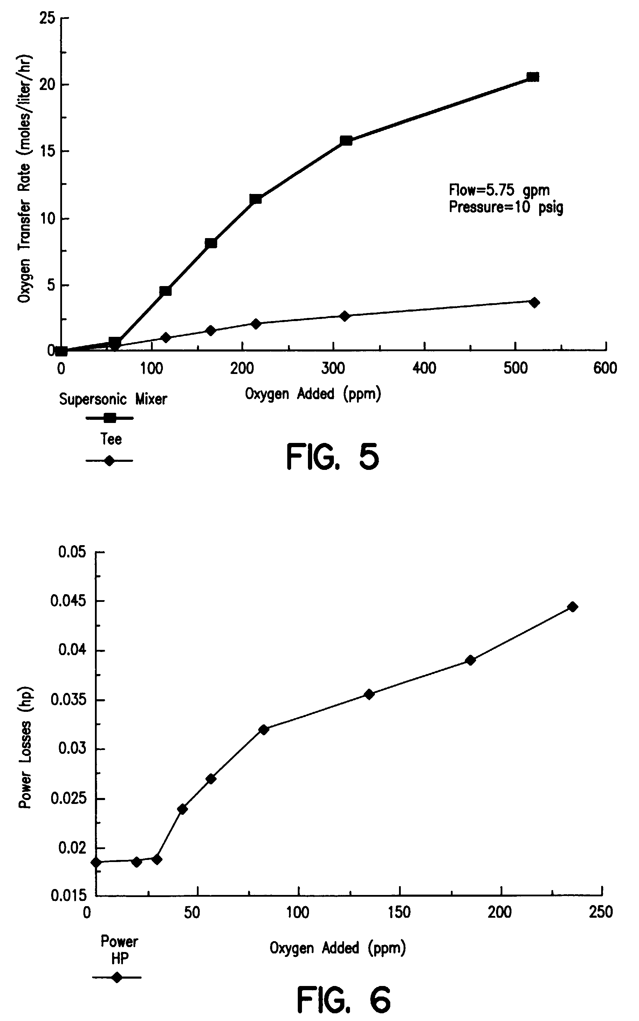

The mass transfer rate of oxygen through the supersonic mixer is calculated from oxygen dissolution data. The flow rate and increase in oxygen concentration as detected by the first oxygen analyzer provided the oxygen dissolution rate. The result is shown in Fig. 5 with water running at 5.75 gpm and 10 psig of back pressure. The rate of oxygen transfer increased with the addition of oxygen. The point of deflection at about 60 ppm of oxygen corresponds to the onset of a supersonic two-phase flow. As oxygen flow rate increases further, the rate of increase in oxygen transfer slows down. Ultimately, the oxygen transfer rate will peak but that has not been tested due to the instability at excessively high gas loadings. As shown in Fig. 2, the required velocity for supersonic two-phase flow will start to increase when the feed oxygen mass fraction is in excess of 0.002 Kg $O_2$/Kg water.

A parallel run was performed by injecting the oxygen into a straight pipe under the same liquid and oxygen flow rates and operating conditions as the supersonic two-phase flow. The result for mass transfer rate verses oxygen addition is shown in Fig. 4. The increase in dissolved oxygen is small across the whole range of oxygen addition. On the other hand, the oxygen transfer rate of the supersonic gas-liquid mixer is an order of magnitude higher. Since the same gas loading was used in both cases, any error created by the oxygen bubbles on the analyzer was minimal.

The power requirement was determined using the pressure drop determined for various flow rates and back pressure. Fig. 6 shows the results from running the supersonic mixer at 3 gpm of water and at various oxygen injection rates. The power consumption was calculated based on the flow rate and pressure drop. The liquid superficial velocity through the mixer throat was 50 ft/sec. In a straight pipe, the power consumption would have increased gradually with oxygen addition. However, the power consumption increased sharply in the case of supersonic two-phase flow. The rate of power increase lowered at about 80 ppm of oxygen, which indicated that the shockwave was less intensive at higher oxygen flow rates.

The oxygen transfer efficiency is defined as the mass transfer rate per unit of horsepower input. At an oxygen loading of 225 ppm, the oxygen transfer efficiency was over 10 lb/hr-Hp. Higher transfer efficiency was achieved even at high oxygen loading because the two-phase mixture was more compressible. The power loss did not increase as quickly as the oxygen dissolution rate.

Fig. 7 shows another alternative to flashing off the reactive gas for quenching is to use thermal quenching or a combination of thermal and flashing to quench the undesirable byproduct formation step. As shown in Fig. 7, a mechanism 700 provides for a thermal quenching zone 716 is used to slow down or stop further reactions in a matter of seconds.

Liquid reactants 702 with or without catalyst is first preheated to reaction temperatures. Reactive gases 704 such as oxygen, hydrogen, chlorine can be preheated. The two streams containing liquid reactants and reacting gases enter the inlet of the supersonic mixer 726 with the deflector cone inside the venturi throat to increase the two phase velocity. Upon exiting the supersonic mixer 707, the intensive shockwave 708 disperses the gas into tiny bubbles before entering the reaction zone 710. The reacting mixture can be further heated at this zone. The reaction zone 710 can be a single reactor or multiple of reactors or multiple loops, depending on the residence time. The entrance point 712 for dilution quenching precedes the thermal quenching zone 716. A thermal quenching zone 716 is used to reduce the temperature below the desired reaction temperature. Refrigerant enters through area 714 and exits through area 718 to cool down the reacting mixture to stop the reaction. Product passes through non-reactive zone 722 and is exited at 724.

The turbulent two phase flow has excellent heat transfer characteristics because the heat transfer coefficient is enhanced under two phase conditions. To further assist the heat transfer, internal fins 720 can be used to increase the heat transfer surface area. Heat transfer fluid, such as cooling water or chilled glycol can be used. If higher quenching rate is desired, refrigerant such as Freon, liquid carbon dioxide, liquid nitrogen, etc., can be use to provide very high thermal driving force. The goal is to create a zone downstream of the reaction zone too cold for further reaction to proceed.

The aforementioned process can be used for liquid phase oxidation reactions, examples of which include the oxidation of toluene to benzoic acid, the oxidation of p-xylene to p-toluic acid, the production of hydrogen peroxide through the oxidation of hydroquinone, the oxidation of toluene to phenol, oxidation of p-xylene to terephthalic acid, and the oxidation of dimethyl sulfide to dimethyl sulfide oxide. The undesirable reaction byproducts from the reaction goes through a second competing reactions to oxidize the product by the oxygen. If the oxidation proceed even further, carbon dioxide and water can be formed.

Other normally gas phase oxidation can also be carried out in this process by using a liquid as a heat sink and select a proper catalyst for the reaction. In this case, the gas-liquid-solid (catalyst) has a much less chance to be over-oxidized (burned) because of the high heat capacity of the liquid verses the gas phase. If the reactant gas is soluble in the liquid, it will then carry out as a slurry reaction with the oxygen being transferred from the bubbles to the solid catalyst surface. An example is the oxidation of methanol over silver oxide catalyst with the solvent can be water.

If the reactant $A_{liquid}$ is an insoluble gas into the water, a hydrophobic catalyst can be selected so that extreme fine gas bubbles (organic gas reactant A with oxygen) can be attached on top of the fine catalyst particles. The reaction will take place as a gas phase oxidation on top of the catalyst. For water soluble products, it can be captured by the water and kept from oxidizing over the catalyst surface. An example is the oxidation of ethylene over hydrophobic catalyst to from ethylene oxide, with the liquid being water. Another example is gas phase oxidation of benzene to maleic anhydride.

Specific features of the invention are shown in one or more of the drawings for convenience only, as each feature may be combined with other features in accordance with the invention. Alternative embodiments will be recognized by those skilled in the art and are intended to be included within the scope of the claims.

**Claims**

1. A process for intensifying the rate of transfer between a gas phase and a liquid phase in a plug flow tubular reactor comprising:

   passing the gas phase into the liquid phase at an inlet of high intensity tubular reactor;
   accelerating the velocity of the gas phase and liquid phase to supersonic velocity;
   reducing the supersonic velocity to a subsonic velocity under pressure of higher than about 1 atm;
   breaking the gas phase into bubbles; and
   dispersing the bubbles into a liquid phase.

2. The process of claim 1 wherein the transfer between the gas phase and liquid phase comprises sequential competing reactions.

3. The process of claim 1 further comprising preheating the gas phase and the liquid phase.

4. The process of claim 1 wherein the average size of the bubbles is substantially less than 1 millimeter.

5. The process of claim 1 wherein the average size of the bubbles is substantially less than 1 micrometer.

6. The process of claim 1 wherein the gas stream is broken into bubbles by high velocity.

7. The process of claim 6 wherein said high velocity exceeds supersonic velocity.

8. The process of claim 1 further comprises a thermal quenching reaction.

FIG. 1

FIG. 7

EP 0 995 489 A2

FIG. 2

FIG. 3

FIG. 4

Flow=5.75 gpm
Pressure=10 psig

Supersonic Mixer

Tee

FIG. 5

Power
HP

Oxygen Added (ppm)

FIG. 6